# FASCICULE DE BREVET EUROPEEN

(11) **EP 4 484 765 B1**
(45) Date de publication et mention de la délivrance du brevet: **25.03.2026**
(21) Numéro de dépôt: 24184552.8
(22) Date de dépôt: 26.06.2024
(51) Int. Cl.: F16B 5/02, F16B 9/00, B64C 1/00, B64C 7/00, B64D 13/00, B64D 45/02

(54) **AÉRONEF COMPORTANT UN SYSTÈME D ATTACHE D'UN ÉLÉMENT À UN FUSELAGE ET COMPORTANT UN ÉCRAN ANTI-FOUDRE**
FLUGZEUG MIT EINEM SYSTEM ZUR BEFESTIGUNG EINES ELEMENTS AN EINEM RUMPF UND MIT EINEM ANTI-RUNDEN SCHIRM
AIRCRAFT COMPRISING A SYSTEM FOR ATTACHING AN ELEMENT TO A FUSELAGE AND COMPRISING A LIGHTNING PROTECTION

(30) Priorité: 29.06.2023 FR 2306863
(43) Date de publication de la demande: 01.01.2025
(73) Titulaire: AIRBUS OPERATIONS, 31060 Toulouse Cedex 9 (FR)
(72) Inventeur: VANDERSTEEN, Marc, 31060 TOULOUSE (FR)
(74) Mandataire: Cabinet Le Guen Maillet

(56) Documents cités:
- US-A1- 2012 236 457
- US-A1- 2014 110 526
- US-B2- 7 898 785

## Description

### DOMAINE TECHNIQUE

La présente invention concerne un aéronef comportant un système d'attache avec une ferrure pour fixer un élément tel qu'une canalisation ou un patin à un fuselage de l'aéronef.

### ÉTAT DE LA TECHNIQUE ANTÉRIEURE

Un aéronef comporte classiquement un fuselage auquel deux ailes sont fixées et chaque aile supporte au moins un moteur, en particulier un turboréacteur. Au niveau de la partie centrale du fuselage, ce dernier est recouvert d'un carénage ventral.

Certains éléments sont fixés à l'extérieur du fuselage, comme des canalisations d'air qui cheminent le long du fuselage entre le fuselage et le carénage ventral. Il peut arriver qu'une de ces canalisations se retrouve en partie en dehors du carénage ventral et soit alors en contact avec des éléments extérieurs, comme les moteurs, et si la foudre tombe sur le moteur, un courant électrique induit peut alors parcourir la canalisation.

Pour éviter que le courant ne se propage au fuselage, voire à l'intérieur de ce dernier, la fixation de la canalisation au fuselage nécessite l'utilisation de matériaux spécifiques pouvant être relativement coûteux.

Il est donc nécessaire de définir un arrangement permettant de réduire le coût nécessaire à la fixation d'une ferrure, en particulier métallique, à l'extérieur du fuselage tout en assurant une isolation électrique.

De la même manière, pour diminuer les dégâts sur le fuselage lors d'un atterrissage en catastrophe, par exemple sans train d'atterrissage, il est prévu des patins qui sont fixés à l'extérieur du fuselage, et ces patins viennent alors glisser sur le tarmac. Ce glissement génère un échauffement du patin et il est donc souhaitable d'éviter que cet échauffement se transmette au fuselage et à l'intérieur de celui-ci. Pour éviter cet échauffement, des matériaux spécifiques et coûteux sont utilisés.

Il est donc nécessaire de définir un arrangement permettant de réduire le coût nécessaire à la fixation d'une ferrure, en particulier métallique, à l'extérieur du fuselage tout en assurant une isolation thermique.

D'une manière générale, il est nécessaire de trouver un arrangement qui permet de limiter le passage de perturbations comme un courant électrique ou un flux de chaleur vers le fuselage. Le document US-B-7,898,785 divulgue un système de protection contre la foudre, où l'élément à protéger contre la foudre est à l'intérieur de l'aéronef.

### EXPOSE DE L'INVENTION

Un objet de la présente invention est de proposer aéronef comportant un système d'attache avec une ferrure métallique pour fixer un élément à l'extérieur du fuselage de 1 aéronef, selon la revendication 1.

À cet effet, est proposé un aéronef comportant un fuselage, un élément et au moins un système d'attache pour fixer l'élément à l'extérieur dudit fuselage, le système d'attache comportant :
- une plaque présentant une première face, et une deuxième face orientée vers le fuselage et où la plaque est fixée audit fuselage,
- une ferrure métallique fixée audit élément et présentant un sabot avec une face de contact en contact avec la première face, et
- au moins un boulon de fixation comportant une vis et un écrou, où la tête de la vis est logée dans la plaque du côté de la deuxième face et où l'écrou est vissé à la vis en prenant en sandwich la plaque et le sabot de la ferrure.

Avec un tel système d'attache, cela permet de limiter le passage de perturbations comme un courant électrique ou un flux de chaleur vers le fuselage en incorporant une plaque tampon.

Avantageusement, la plaque est constituée d'un matériau électriquement isolant arrangé pour empêcher le passage du courant.

Avantageusement, la plaque est constituée d'un matériau thermiquement isolant arrangé pour limiter le passage de la chaleur.

Avantageusement, le système d'attache comporte une plaque intermédiaire disposée contre la deuxième face de la plaque et destinée à être disposée contre le fuselage.

Avantageusement, la plaque intermédiaire est constituée du même matériau que le matériau constituant la plaque.

Avantageusement, la plaque est fixée au fuselage par des boulons où chacun comporte une vis avec une tête et un écrou, pour chaque boulon, la plaque comporte un perçage traversant et le fuselage comporte un orifice traversant et aligné avec le perçage, pour chaque boulon, la vis dudit boulon traverse un perçage et l'orifice associé de manière à prendre en sandwich la plaque et le fuselage entre la tête de la vis dudit boulon et l'écrou dudit boulon, et les perçages de la plaque sont arrangés de manière à ce qu'il n'y a aucun contact entre le sabot et les têtes des vis.

Avantageusement, la plaque est plus large que le sabot et les perçages sont à l'extérieur et à distance du sabot.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en coupe partielle selon la ligne II-II de la partie basse du fuselage de l'aéronef de la Fig. 1,
Fig. 3 est une vue en perspective d'une implantation particulière d'un système d'attache selon l'invention,
Fig. 4 est une vue de dessus d'un système d'attache selon l'invention,
Fig. 5 est une vue en coupe selon la ligne V-V de la Fig. 4 d'un système d'attache selon un premier mode de réalisation de l'invention, et
Fig. 6 est une vue en coupe selon la ligne V-V de la Fig. 4 d'un système d'attache selon un deuxième mode de réalisation de l'invention.

### EXPOSÉ DÉTAILLÉ DE MODES DE RÉALISATION

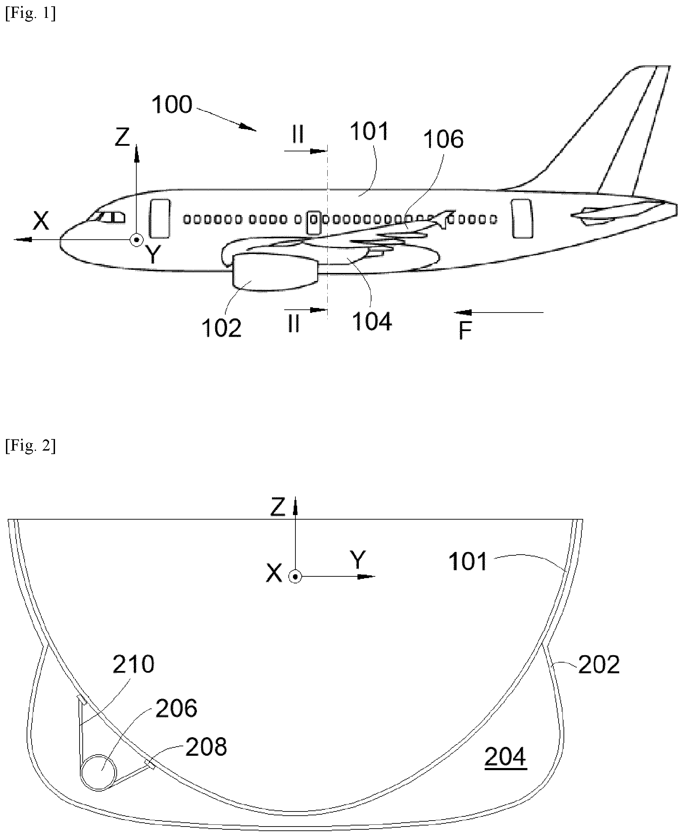

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un fuselage 101 de part et d'autre duquel est fixée une aile 106 qui porte chacune au moins un moteur 102, en particulier un turboréacteur, ici par l'intermédiaire d'un mât réacteur 104.

Dans la description qui suit, et par convention, on appelle X la direction longitudinale de l'aéronef 100 orientée positivement dans le sens d'avancement de l'aéronef 100, on appelle Y la direction transversale de l'aéronef 100 qui est horizontale lorsque l'aéronef 100 est au sol, et Z la direction verticale ou hauteur verticale lorsque l'aéronef 100 est au sol, ces trois directions X, Y et Z étant orthogonales entre elles.

La Fig. 2 montre une coupe par un plan vertical du fuselage 101. Au niveau de la partie centrale du fuselage 101, l'aéronef 100 comporte un carénage ventral 202 qui est solidaire du fuselage 101 et qui est à l'extérieur de ce dernier pour délimiter entre eux un espace 204 dans lequel au moins un élément 206 de l'aéronef 100 est arrangé. Le carénage ventral 202 permet entre autres de protéger l'élément 206 des impacts directs de la foudre.

Dans le mode de réalisation de l'invention présenté ici, l'élément 206 est une canalisation, comme une canalisation d'air alimentant par exemple un moteur 102, mais il peut s'agir d'un autre élément. Par exemple, l'élément 206 peut être un patin, destiné à assurer que l'aéronef 100 glisse sur le tarmac en cas d'atterrissage sans train d'atterrissage par exemple. L'élément 206 est fixé au fuselage 101 par au moins une ferrure 208 solidaire du fuselage 101. Dans le mode de réalisation de l'invention présenté à la Fig. 2, l'élément 206 comporte ici des barres 210 qui sont fixées aux ferrures 208.

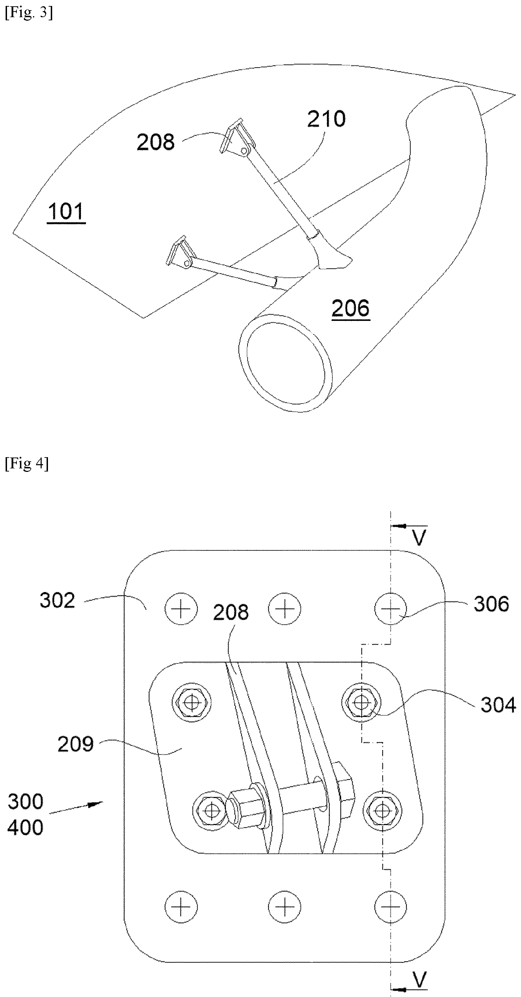

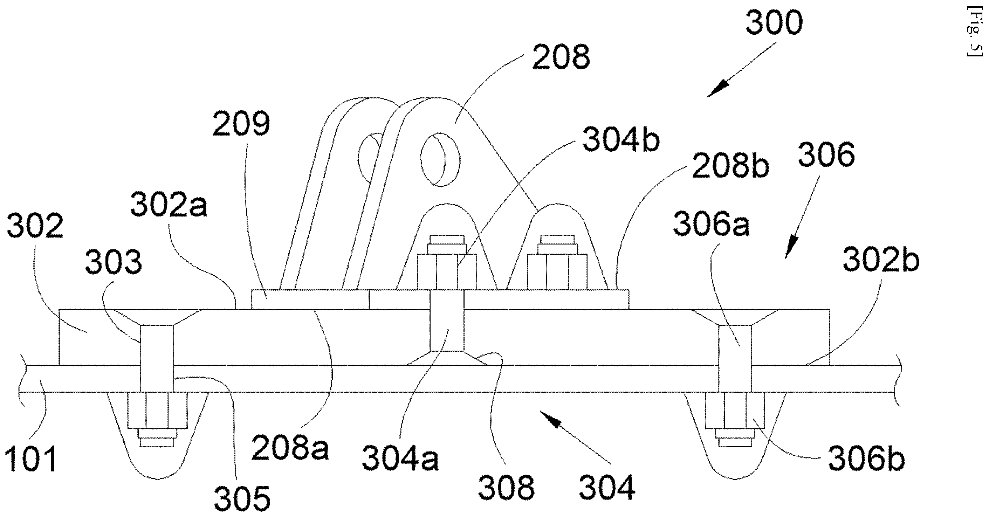

La Fig. 3 montre les mêmes éléments que ceux de la Fig. 2 mais sans le carénage ventral 202. La Fig. 4 montre un système d'attache 300 selon un premier mode de réalisation de l'invention et la Fig. 5 montre le système d'attache 300 en coupe.

La ferrure 208 prend ici la forme d'une chape femelle dans laquelle se fixe l'élément 206, ici par l'intermédiaire d'une barre 210. La ferrure 208 présente ici un sabot 209 qui est ici une paroi plane qui permet la fixation de la ferrure 208 au fuselage 101 à l'aide de boulons de fixation 304 décrits ci-dessous.

Le système d'attache 300 comporte la ferrure 208 et une plaque 302.

La plaque 302 présente une première face 302a et une deuxième face 302b. La deuxième face 302b est orientée vers le fuselage 101 et à l'extérieur de ce dernier.

La plaque 302 est fixée au fuselage 101 par tous moyens de fixation appropriés, comme des éléments de visserie, des rivets, des points de soudure, etc.

Dans le mode de réalisation de l'invention présenté ici, la plaque 302 est fixée au fuselage 101 par l'intermédiaire de plusieurs boulons 306 où chacun comporte une vis 306a avec une tête et un écrou 306b. À cette fin, la plaque 302 comporte des perçages 303 traversants et le fuselage 101 comporte des orifices 305 également traversants et positionnés en alignement avec les perçages 303 lorsque la plaque 302 est plaquée contre le fuselage 101. Pour chaque boulon 306, la vis 306a dudit boulon 306 traverse un perçage 303 et l'orifice 305 associé et la plaque 302 et le fuselage 101 sont ainsi pris en sandwich entre la tête de la vis 306a dudit boulon 306 et l'écrou 306b dudit boulon 306. Dans le mode de réalisation de l'invention présenté à la Fig. 5, chaque tête de vis 306a est une tête fraisée insérée dans un alésage fraisé de la plaque 302 du côté de la première face 302a et l'écrou 306b est en appui contre le fuselage 101. Les boulons 306 ne traversent pas la ferrure 208.

Pour empêcher le passage du courant ou de la chaleur entre le sabot 209 et les boulons 306, les perçages 303 de la plaque 302 sont arrangés de manière à ce qu'il n'y a aucun contact entre le sabot 209 et les têtes des vis 306a en position assemblée. Dans le mode de réalisation de l'invention présenté ici, la plaque 302 est plus large que le sabot 209 et les perçages 303 sont à l'extérieur et à distance du sabot 209.

Le sabot 209 de la ferrure 208 présente une face de contact 208a qui est en contact avec la première face 302a de la plaque 302. La plaque 302 est ainsi entre la ferrure 208 et le fuselage 101.

Le système d'attache 300 comporte également au moins un boulon de fixation 304, où chacun comporte une vis 304a et un écrou 304b.

Pour chaque boulon de fixation 304, la plaque 302 comporte du côté de la deuxième face 302b, un trou 308 traversant la plaque 302, et qui, dans la forme illustrée est ici un trou fraisé, dans lequel la tête de la vis 304a est logée de manière à affleurer la deuxième face 302b qui reste ainsi plane.

Chaque écrou 304b est vissé à la vis 304a associée en prenant en sandwich la plaque 302 et la ferrure 208. Chaque écrou 304b est ainsi contre une face d'appui 208b qui est la face du sabot 209 opposée à la face de contact 208a.

Avec un tel assemblage, il est possible de protéger le fuselage 101 des éventuelles perturbations provenant de l'élément 206 à travers la ferrure 208, comme un courant électrique ou un flux de chaleur. La plaque 302 constitue ainsi un écran en empêchant les perturbations (courant, chaleur) d'atteindre le fuselage 101.

La tête de la vis 304a ne traverse pas le fuselage 101 et elle est intégrée à la plaque 302 de manière à ce que ladite tête soit affleurante avec la deuxième face 302b de la plaque 302 et ne dépasse pas par rapport à celle-ci.

Les vis 304a et les écrous 304b des boulons de fixation 304 permettent de fixer la plaque 302 à la ferrure 208 et donc à l'élément 206 sans traverser le fuselage 101, la fixation de la plaque 302 sur le fuselage 101 étant réalisée par les vis 306a et écrous 306b des boulons 306.

Par exemple, dans le cas où l'élément 206 est un patin, la plaque 302 est avantageusement constituée d'un matériau qui est arrangé pour limiter le passage de la chaleur et ainsi un échauffement du patin entraînera un échauffement limité du fuselage 101. Un tel matériau agit ainsi comme un isolant thermique, et il peut être réalisé en MICA, en polymères renforcés de fibres de verre, en alliage de titane, en polymères renforcés de fibres de carbone, etc.

Par exemple, dans le cas où l'élément 206 est une canalisation susceptible de recevoir un impact de foudre qui pourrait induire un courant dans la canalisation et dans la ferrure 208, en particulier lorsqu'elle est métallique, la plaque 302 est avantageusement constituée d'un matériau qui est arrangé pour empêcher le passage du courant et ainsi un impact de foudre n'atteint pas le fuselage 101. Un tel matériau agit comme un isolant électrique, et il peut être réalisé en ABS, en polymères renforcés de fibres de verre, etc.

Du fait de la présence du carénage ventral 202, les boulons 306 ne peuvent pas être atteints directement par un potentiel impact de foudre.

Selon un mode de réalisation particulier, la plaque 302 présente une résistance électrique minimale de 1 ohm.

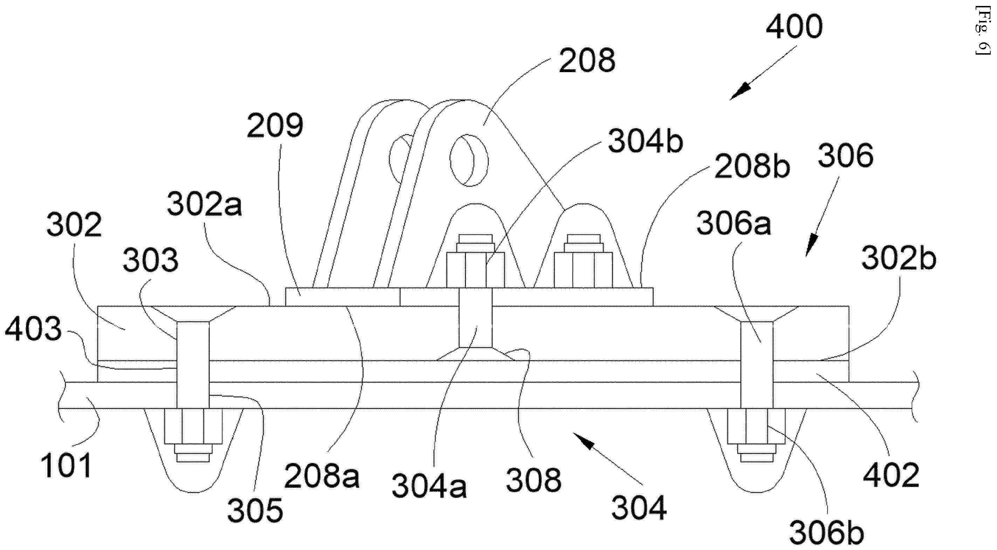

La Fig. 6 montre un système d'attache 400 selon un deuxième mode de réalisation de l'invention. La Fig. 4 correspond également au système d'attache 400 selon le deuxième mode de réalisation de l'invention. Les éléments identiques au premier mode de réalisation portent les mêmes références.

Pour limiter encore plus le passage des éventuels courants électriques entre la ferrure 208 et le fuselage 101, le système d'attache 400 comporte une plaque intermédiaire 402 qui est disposée entre la deuxième face 302b de la plaque 302 et le fuselage 101, de manière à séparer les têtes de vis 304a de chaque boulon de fixation 304 du fuselage 101. La plaque intermédiaire 402 est ainsi d'un côté contre la deuxième face 302b de la plaque 302 et de l'autre côté contre le fuselage 101.

Pour chaque boulon 306, la plaque intermédiaire 402 présente un alésage 403 traversant dans lequel s'introduit la vis 306a dudit boulon 306.

Bien que ce deuxième mode de réalisation soit plus particulièrement adapté dans le cas de courants induits, il peut être mis en œuvre pour le cas relatif au transfert de chaleur.

Selon le cas, la plaque intermédiaire 402 est constituée du même matériau que le matériau constituant la plaque 302, c'est-à-dire un matériau thermiquement isolant ou un matériau électriquement isolant.

Dans les modes de réalisation de l'invention présentés sur les Figs. 5 et 6, chaque écrou 304b, 306b est recouvert d'un capuchon 310 réalisé dans un matériau électriquement isolant, comme de l'ABS, des polymères renforcés de fibres de verre, etc.

## Revendications

1. Aéronef (100) comportant un fuselage (101), un élément (206) et au moins un système d'attache (300, 400) pour fixer l'élément (206) à l'extérieur dudit fuselage (101), le système d'attache (300, 400) comportant :
- une plaque (302) présentant une première face (302a) et une deuxième face (302b) orientée vers le fuselage (101), et où la plaque (302) est fixée audit fuselage (101),
- une ferrure (208) métallique fixée audit élément (206) et présentant un sabot (209) avec une face de contact (208a) en contact avec la première face (302a), et
- au moins un boulon de fixation (304) comportant une vis (304a) et un écrou (304b), où la tête de la vis (304a) est logée dans la plaque (302) du côté de la deuxième face (302b) et où l'écrou (304b) est vissé à la vis (304a) en prenant en sandwich la plaque (302) et le sabot (209) de la ferrure (208).

2. Aéronef (100) selon la revendication 1, **caractérisé en ce que** la plaque (302) est constituée d'un matériau électriquement isolant arrangé pour empêcher le passage du courant.

3. Aéronef (100) selon la revendication 1, **caractérisé en ce que** la plaque (302) est constituée d'un matériau thermiquement isolant arrangé pour limiter le passage de la chaleur.

4. Aéronef (100) selon l'une des revendications 1 à 3, **caractérisé en ce qu'**il comporte une plaque intermédiaire (402) disposée contre la deuxième face (302b) de la plaque (302) et destinée à être disposée contre le fuselage (101).

5. Aéronef (100) selon la revendication 4, **caractérisé en ce que** la plaque intermédiaire (402) est constituée du même matériau que le matériau constituant la plaque (302).

6. Aéronef (100) selon l'une des revendications 1 à 5, **caractérisé en ce que** la plaque (302) est fixée au fuselage (101) par des boulons (306) où chacun comporte une vis (306a) avec une tête et un écrou (306b), **en ce que** pour chaque boulon (306), la plaque (302) comporte un perçage (303) traversant et le fuselage (101) comporte un orifice (305) traversant et aligné avec le perçage (303), **en ce que** pour chaque boulon (306), la vis (306a) dudit boulon (306) traverse un perçage (303) et l'orifice (305) associé de manière à prendre en sandwich la plaque (302) et le fuselage (101) entre la tête de la vis (306a) dudit boulon (306) et l'écrou (306b) dudit boulon (306), et **en ce que** les perçages (303) de la plaque (302) sont arrangés de manière à ce qu'il n'y a aucun contact entre le sabot (209) et les têtes des vis (306a).

7. Aéronef (100) selon la revendication 6, **caractérisé en ce que** la plaque (302) est plus large que le sabot (209) et les perçages (303) sont à l'extérieur et à distance du sabot (209).

## Patentansprüche

1. Flugzeug (100) mit einem Rumpf (101), einem Element (206) und mindestens einem Befestigungssystem (300, 400) zum Befestigen des Elements (206) an der Außenseite des Rumpfs (101), wobei das Befestigungssystem (300, 400) Folgendes aufweist:
- eine Platte (302) mit einer ersten Seite (302a) und einer zweiten Seite (302b), die zum Rumpf (101) hin ausgerichtet ist, und wobei die Platte (302) an dem Rumpf (101) befestigt ist,
- ein metallisches Beschlagteil (208), das an dem Element (206) befestigt ist und einen Schuh (209) mit einer Kontaktfläche (208a) aufweist, die mit der ersten Fläche (302a) in Kontakt steht, und
- mindestens einen Befestigungsbolzen (304) mit einer Schraube (304a) und einer Mutter (304b), wobei der Kopf der Schraube (304a) in der Platte (302) auf der Seite der zweiten Seite (302b) sitzt und die Mutter (304b) mit der Schraube (304a) verschraubt ist, wobei sie die Platte (302) und den Schuh (209) des Beschlagteils (208) sandwichartig umschließt.

2. Flugzeug (100) nach Anspruch 1, **dadurch gekennzeichnet, dass** die Platte (302) aus einem elektrisch isolierenden Material besteht, das so angeordnet ist, dass es den Stromdurchgang verhindert.

3. Flugzeug (100) nach Anspruch 1, **dadurch gekennzeichnet, dass** die Platte (302) aus einem wärmeisolierenden Material besteht, das so angeordnet ist, dass es den Wärmedurchgang begrenzt.

4. Flugzeug (100) nach einem der Ansprüche 1 bis 3, **dadurch gekennzeichnet, dass** es eine Zwischenplatte (402) aufweist, die an der zweiten Seite (302b) der Platte (302) angeordnet ist und dazu bestimmt ist, am Rumpf (101) angeordnet zu werden.

5. Flugzeug (100) nach Anspruch 4, **dadurch gekennzeichnet, dass** die Zwischenplatte (402) aus dem gleichen Material besteht wie das Material, aus dem die Platte (302) besteht.

6. Flugzeug (100) nach einem der Ansprüche 1 bis 5, **dadurch gekennzeichnet, dass** die Platte (302) mit Bolzen (306) am Rumpf (101) befestigt ist, wobei jeder Bolzen eine Schraube (306a) mit einem Kopf und eine Mutter (306b) aufweist, dass für jeden Bolzen (306) die Platte (302) eine Durchgangsbohrung (303) aufweist und der Rumpf (101) eine Durchgangsöffnung (305) aufweist, die mit der Bohrung (303) fluchtet, dass für jeden Bolzen (306) die Schraube (306a) des Bolzens (306) eine Bohrung (303) und die zugehörige Öffnung (305) durchdringt, um die Platte (302) und den Rumpf (101) zwischen dem Kopf der Schraube (306a) des Bolzens (306) und der Mutter (306b) des Bolzens (306) sandwichartig zu umschließen, und dass die Bohrungen (303) in der Platte (302) so angeordnet sind, dass kein Kontakt zwischen dem Schuh (209) und den Köpfen der Schrauben (306a) besteht.

7. Flugzeug (100) nach Anspruch 6, **dadurch gekennzeichnet, dass** die Platte (302) breiter als der Schuh (209) ist und die Bohrungen (303) außerhalb und in einem Abstand zum Schuh (209) angeordnet sind.

## Claims

1. Aircraft (100) having a fuselage (101), an element (206) and at least one attachment system (300, 400) for fastening the element (206) to the outside of said fuselage (101), the attachment system (300, 400) having:
- a plate (302) having a first face (302a) and a second face (302b) oriented towards the fuselage (101), and wherein the plate (302) is fastened to said fuselage (101),
- a metal fitting (208) fastened to said element (206) and having a shoe (209) with a contact face (208a) in contact with the first face (302a), and
- at least one fastening bolt (304) having a screw (304a) and a nut (304b), wherein the head of the screw (304a) is housed in the plate (302) on the side of the second face (302b) and wherein the nut (304b) is screwed to the screw (304a), sandwiching the plate (302) and the shoe (209) of the fitting (208).

2. Aircraft (100) according to Claim 1, **characterized in that** the plate (302) is constituted of an electrically insulating material arranged to prevent the passage of current.

3. Aircraft (100) according to Claim 1, **characterized in that** the plate (302) is constituted of a thermally insulating material arranged to limit the passage of heat.

4. Aircraft (100) according to one of Claims 1 to 3, **characterized in that** it has an intermediate plate (402) disposed against the second face (302b) of the plate (302) and intended to be disposed against the fuselage (101).

5. Aircraft (100) according to Claim 4, **characterized in that** the intermediate plate (402) is constituted of the same material as the material constituting the plate (302).

6. Aircraft (100) according to one of Claims 1 to 5, **characterized in that** the plate (302) is fastened to the fuselage (101) by bolts (306), wherein each one has a screw (306a) with a head and a nut (306b), **in that**, for each bolt (306), the plate (302) has a through-piercing (303) and the fuselage (101) has a through-orifice (305) aligned with the piercing (303), **in that**, for each bolt (306), the screw (306a) of said bolt (306) passes through a piercing (303) and the associated orifice (305) so as to sandwich the plate (302) and the fuselage (101) between the head of the screw (306a) of said bolt (306) and the nut (306b) of said bolt (306), and **in that** the piercings (303) of the plate (302) are arranged such that there is no contact between the shoe (209) and the heads of the screws (306a).

7. Aircraft (100) according to Claim 6, **characterized in that** the plate (302) is wider than the shoe (209) and the piercings (303) are on the outside of and at a distance from the shoe (209).
